# EUROPÄISCHE PATENTANMELDUNG

(11) **EP 2 457 683 A1**
(43) Veröffentlichungstag der Anmeldung: **30.05.2012**
(21) Anmeldenummer: 10192554.3
(22) Anmeldetag: 25.11.2010
(51) Int. Cl.: B23K 20/10

(54) **Torsionales Schweissen**

(71) Anmelder: Telsonic Holding AG, 9552 Bronschhofen (CH)
(72) Erfinder: Lang, Georg, 97855 Tiefenstein (DE); Büttiker, Albert, 9533 Kirchberg (CH)
(74) Vertreter: Hepp Wenger Ryffel AG

(57) **Zusammenfassung**

Die Erfindung betrifft eine Vorrichtung (1) zum Verschweissen von Metallteilen mittels Ultraschall, insbesondere zum Verschweissen von Litzen, umfassend eine Sonotrode (3) mit einem Sonotrodenkopf (3.1), welcher von einem Schwingungserzeuger (9) in Torsionsschwingungen bezüglich einer Torsionsachse (B) anregbar ist. Der Sonotrodenkopf (3.1) weist dabei bezüglich der Torsionsachse (B) umfangsseitig wenigstens eine Schweissfläche (3.4) auf. Weiter ist ein Amboss (18) mit einer Gegen-/Kompaktierfläche (18.1) vorhanden, welcher gegenüber der Schweissfläche (3.4) der Sonotrode (3) bezüglich dieser feststehend anordenbar ist. Bei gegenüberliegender Anordnung begrenzen die Schweissfläche (3.4) und die Kompaktierfläche (18.1) einen für die Aufnahme von zu verschweissenden Teilen vorgesehenen Verdichtungsraum (8) in einer Richtung senkrecht zur Torsionsachse (B). Dabei ist die Sonotrode (3) derart ausgebildet und mit dem Schwingungserzeuger (9) gekoppelt, dass die gesamte Sonotrode (3) zu einer Torsionsschwingung mit vernachlässigbar kleinem Längsschwingungsanteil anregbar ist.

## Beschreibung

### Technisches Gebiet

Die Erfindung betrifft eine Vorrichtung zum Ultraschallschweissen mit den Merkmalen des Oberbegriffs des Anspruchs 1. Die Erfindung betrifft allgemein eine Vorrichtung zum Verschweissen von Kabeln wie beispielsweise Litzen. Die Erfindung betrifft auch ein mobiles Schweissgerät zum Ultraschallschweissen.

Als Kabel werden im vorliegenden Sinne Kabel mit einer oder mehreren Litzen sowie einzelne Drähte oder elektrisch leitende Seile verstanden. Ein Kabel kann grundsätzlich aber auch ein Terminal sein, d.h. eine starre elektrische Verbindung.

Bei bekannten derartigen Vorrichtungen wird eine Ultraschallschwingung parallel zu einer Schweissfläche eingebracht, wobei gleichzeitig senkrecht dazu, beispielsweise über eine Kompaktier- oder Gegenfläche, eine Kompaktierkraft ausgeübt wird. Dabei ist typischerweise ein Verdichtungs- bzw. Schweissraum vorgesehen, in welchem das Schweissgut vor und während dem Schweissvorgang zusammengepresst d.h. kompaktiert wird. Insbesondere beim Verschweissen von Litzen ist es für eine haltbare Verschweissung erforderlich, die einzelnen Litzendrähte während des Verschweissens mit vergleichsweise grosser Kraft zusammenzupressen. Während des Schweissvorgangs hat die Ultraschallschwingung aufgrund der gegenseitigen Bewegung des kompaktierten Schweissguts zur Folge, dass sich die Teile verbinden d.h. eine Verschweissung erfolgt.

Bei einer Vielzahl von industriellen Anwendungen, insbesondere in der Automobilindustrie, besteht das Bedürfnis, bereits verbaute bzw. schwer zugängliche Teile mittels Ultraschallschweissen verbinden zu können. Beispielsweise können bei der Herstellung von Kabelbäumen für Fahrzeuge, welche an einem Brett vorkonfektioniert werden, die einzelnen Kabel zum Teil lediglich um etwa 4 cm angehoben werden. Dabei besteht insbesondere auch vermehrt das Bedürfnis, nicht nur Kupfer sondern auch stark oxidierende Materialien wie Aluminium mittels Ultraschallschweissen zu verbinden. Hierzu ist es erforderlich, dass eine möglichst hohe Leistung in den Schweissbereich eingebracht wird, um trotz der Oxidschicht eine haltbare Schweissverbindung zu schaffen.

Aus der DE 10 2007 026 707 B3 ist eine Vorrichtung zum elektrisch leitenden Verbinden von Aluminiumlitzen bekannt. Eine Sonotrode weist hierbei eine Schweissfläche auf, welche in direktem Kontakt mit den Aluminiumlitzen steht. Die in ihrer Längsrichtung schwingende Sonotrode beaufschlagt die Litzen in deren Längsrichtung mit einer Ultraschallschwingung, sodass die Litzen miteinander verschweisst werden. Die Litzen müssen hierzu in Längsrichtung der Sonotrode angeordnet werden, was einen grossen Platzbedarf zur Folge hat bzw. voraussetzt, dass die zu verschweissenden Teile eine entsprechende Anordnung überhaupt zulassen.

Die EP 0 143 936 B1 schlägt zum platzsparenden Verschweissen vor, einen Schweiss- bzw. Verdichtungsraum einer Vorrichtung senkrecht zur Sonotrodenlängsachse auszubilden, sodass auch die zu verschweissenden Teile senkrecht zur Sonotrodenachse angeordnet werden können. Dabei werden die Teile allerdings quer zum Verdichtungsraum und damit quer zu ihrer Längsrichtung mit der Ultraschallschwingung beaufschlagt, womit nur eine geringe effektive Leistung eingebracht wird. Ein Metallschweissen von z.B. Litzen, insbesondere aus Aluminium, ist somit kaum möglich.

Die WO 95/23668 A1 schlägt vor, einen Sonotrodenkopf zu überlagerten longitudinalen und torsionalen Schwingungen anzuregen, wobei die Schwingungsenergie umfangsseitig abgenommen wird. Damit wird ermöglicht, einen Verdichtungsraum senkrecht zur Sonotrodenachse anzuordnen und dennoch die zu verschweissenden Teile bis zu einem gewissen Grad in deren Längsrichtung mit der Ultraschallschwingung zu beaufschlagen. Allerdings hat sich herausgestellt, dass aufgrund der Ausbildung und Anregung der Sonotrode eine Gestaltung des Verdichtungsraums konstruktiv aufwändig ist und mit vergleichsweise grossen Toleranzen erfolgen muss. Ausserdem können sich beim Verschweissen von Litzen quer zur Litzenrichtung eingebrachte Ultraschallschwingungen nachteilig auf die Verschweissung auswirken, da diese die kompaktierte Anordnung der Litzendrähte stören (einzelne Drähte "rollen", anstatt zu reiben), wodurch auch die Schwingungen in Längsrichtungen an Wirksamkeit verlieren können.

### Technische Aufgabe

Die Aufgabe der Erfindung ist es daher, die Nachteile des Bekannten zu vermeiden und insbesondere eine vielseitig anwendbare Vorrichtung zum Ultraschallschweissen bereit zu stellen, welche einfach in der Konstruktion ist und ein Platz sparendes sowie effizientes und haltbares Verschweissen, insbesondere an einem Kabelbaum, ermöglicht. Die Vorrichtung soll dabei insbesondere auch ein Verschweissen von Litzen aus Kupfer sowie aus Aluminium ermöglichen. Weiter ist es die Aufgabe der Erfindung, ein mobiles Schweissgerät bereitzustellen.

### Darstellung der Erfindung

Erfindungsgemäss wird die Aufgabe dadurch gelöst, dass die Vorrichtung zum Verschweissen von Metallteilen mittels Ultraschall, eine Sonotrode mit einem Sonotrodenkopf umfasst, welcher von einem Schwingungserzeuger in Torsionsschwingungen bezüglich einer Torsionsachse anregbar ist. Dabei ist am Sonotrodenkopf bezüglich der Torsionsachse umfangsseitig eine Schweissfläche angeordnet. Weiter ist ein Amboss mit einer Kompaktierfläche vorhanden, welche gegenüber der Schweissfläche der Sonotrode bezüglich dieser feststehend anordenbar ist. Bei gegenüberliegender Anordnung begrenzen die Schweissfläche und die Kompaktierfläche einen für die Aufnahme von zu verschweissende Teilen vorgesehen Verdichtungsraum in einer Richtung senkrecht zur Torsionsachse. Die Erfindung zeichnet sich dadurch aus, dass die Sonotrode derart ausgebildet und mit dem Schwingungserzeuger gekoppelt ist, dass die gesamte Sonotrode zu einer Torsionsschwingung mit vernachlässigbar kleinem Längsschwingungsanteil anregbar ist. Mit anderen Worten heisst dies, dass der Schwingungserzeuger zur Erzeugung von Längsschwingungen ausgebildet und senkrecht zur Torsionsachse angeordnet ist, wobei der Schwingungserzeuger in einem radialen Abstand von der Torsionsachse, insbesondere tangential, an einem Torsionsschwinger angreift, an welchem die Sonotrode rotationsfest angebracht ist.

Indem erfindungsgemäss die gesamte Sonotrode in eine Torsionsschwingung versetzt wird, kann der Anteil einer in der Praxis kaum zu vermeidenden Längsschwingung auf einen vernachlässigbar geringen Anteil reduziert werden. Unter einem vernachlässigbar kleinen Längsschwingungsanteil wird hier und im Folgenden ein Längsschwingungsanteil verstanden, welcher eine longitudinale Amplitude aufweist, die weniger als 1 % der torsionalen Arbeitsamplitude beträgt, bevorzugt weniger als 0.5 %. Es hat sich sogar gezeigt, dass in der Praxis mit der erfindungsgemässen Vorrichtung Amplituden des Längsschwingungsanteils erreicht werden, welche nur etwa 0.2 % der Arbeitsamplitude betragen.

Zum einen wird damit erreicht, dass weitgehend die gesamte vom Schwingungserzeuger zugeführte Schwingungsenergie in der Torsionsschwingung der Sonotrode verfügbar ist, sodass auch bei senkrecht zur Torsionsachse angeordnetem Schweissgut ein optimaler Leistungsübertrag stattfindet.

Zum anderen beschreibt ein Arbeitsbereich der Sonotrode, im vorliegenden Fall der Sonotrodenkopf mit daran ausgebildeter Schweissfläche, eine wohldefinierte Rotations- bzw. Drehbewegung ohne nennenswerte Auslenkung in Längsrichtung. Angrenzende feststehende oder verschiebbare Teile der Vorrichtung können daher mit deutlich geringeren Toleranzen an den Sonotrodenkopf herangebaut bzw. geschoben werden, ohne dass allfällig auftretende Schwingungsamplituden in Längsrichtung berücksichtigt werden müssen. Insbesondere der einseitig von der Schweissfläche der Sonotrode begrenzte Verdichtungs- bzw. Schweissraum kann vergleichsweise exakt begrenzt werden, indem Begrenzungselemente auch in Richtung der Torsionsachse dicht am Sonotrodenkopf angeordnet sein können. Damit kann beispielsweise verhindert werden, dass besonderes feine Litzendrähte beim Kompaktieren im Verdichtungsraum in Spalten zwischen Begrenzungselementen des Verdichtungsraums eintreten können bzw. sich dort verfangen können.

Mit Vorteil ist der in der Fachliteratur auch als Konverter bezeichnete Schwingungserzeuger der erfindungsgemässen Vorrichtung daher zur Erzeugung von Längsschwingungen ausgebildet und senkrecht zur Torsionsachse der Sonotrode angeordnet. Derartige Schwingungserzeuger sind verbreitet, sodass kostengünstige Standardbauelemente angewendet werden können. Indem der Schwingungserzeuger senkrecht und seitlich versetzt zur Torsionsachse angeordnet ist, kann durch geeignete, direkte oder indirekte, Kopplung an die Sonotrode die Längsschwingung des Erzeugers in einer Torsionsschwingung der gesamten Sonotrode umgesetzt werden. Es ist auch denkbar, das zwei oder mehrere Schwingungserzeuger mit der Sonotrode zur Erzeugung der Torsionsschwingung zusammenwirken, wobei diese dann je nach Anordnung bzw. Anzahl z.B. wechselseitig getaktet sind.

Zur Anregung der Torsionsschwingung der Sonotrode wirkt der Schwingungserzeuger bevorzugt über einen bezüglich der Torsionsschwingung mit der Sonotrode gekoppelten Torsionsschwinger mit der Sonotrode zusammen. Der Torsionsschwinger kann z.B. als koaxial zur Torsionsachse angeordneter Achskörper ausgebildet sein, an dessen einen Endbereich die Sonotrode rotationsfest befestigt ist. Ein Bereich am gegenüberliegenden Längsende des Achskörpers kann z.B. zum Angriff des Schwingungserzeugers vorgesehen sein. Zur schwingungsentkoppelten Lagerung an einem Gehäuse der Vorrichtung kann der Achskörper z.B. auf bekannte Weise in einem Schwingungsknoten des angeregten Schwingungsmodes am Gehäuse unterstützt sein.

Zur Anregung der Torsionsschwingung im Torsionsschwinger und der damit verbundenen Sonotrode greift ein Aktor des Schwingungserzeugers bevorzugt in einem radialen Abstand von der Torsionsachse am Torsionsschwinger an. Besonders einfach lässt sich ein Angriff in einem Bereich tangential am Querschnitt des Torsionsschwingers verwirklichen. Indem der Aktor in einem radialen Abstand von der Torsionsachse am Torsionsschwinger angreift erfährt dieser ein Drehmoment um die Torsionsachse. Damit kann auf einfach Weise die am Aktor abgreifbare Längsschwingung direkt in eine Torsionsschwingung des Torsionsschwingers umgesetzt werden. Indem der Schwingungserzeuger senkrecht zur Torsionsachse angeordnet ist, erfährt der Torsionssschwinger nur ein Drehmoment um die Torsionsachse ohne longitudinale Kraftkomponenten.

Bevorzugt fällt die Torsionsachse mit einer Längsachse der Sonotrode zusammen. Mit Vorteil ist dabei die Sonotrode bezüglich der Längsachse achsensymmetrisch ausgebildet, sodass sich bezüglich der Torsionsachse keine Unwuchten ergeben. Im Falle eines Torsionsschwingers ist dieser bevorzugt ebenfalls achssysmmetrisch bezüglich seiner Längsachse ausgebildet, wobei die Längsachse mit der Torsionsachse zusammenfällt.

In einer bevorzugten Ausführungsform kragt der Sonotrodenkopf flanschartig an einem freien Ende der Sonotrode quer zur Torsionsachse aus. Der flanschartige Sonotrodenkopf weist in Längsrichtung mit Vorteil zwei quer zur Torsionsachse und planparallele ausgerichtete Oberflächen auf. Ein Abstand der Oberflächen in Richtung der Torsionsachse definiert dabei eine Dicke des Sonotrodenkopfs. Mit Vorteil erstreckt sich dabei die Schweissfläche über die gesamte Längsdimension, d.h. die Dicke des Sonotrodenkopfs. Damit wird zum einen erreicht, dass die Schweissfläche unabhängig von der übrigen Ausbildung der Sonotrode in einem weitgehend beliebigen radialen Abstand von der Torsionsachse angeordnet sein kann. Zum anderen kann die gesamte Dicke des Flansches zur Schwingungsübertragung an der Schweissfläche genutzt werden. Der Flansch kann daher vergleichsweise dünn ausgebildet sein.

In einer bevorzugten Ausführungsform umfasst der flanschartige Sonotrodenkopf zwei quer zur Torsionsachse symmetrisch ausgebildete Laschen, von welchen wenigstens eine umfangsseitig die Schweissfläche aufweist. Die schwingende Masse des Sonotrodenkopfs kann damit gegenüber einem vollständig kreisringförmigen Flansch weiter verringert werden. In einer Abwandlung können beide Laschen umfangsseitig eine Schweissfläche aufweisen, sodass bei Abnutzung der einen Schweissfläche die Sonotrode um 180 Grad bezüglich der Torsionsachse gedreht werden kann, um die andere Schweissfläche zur Benutzung am Verdichtungs- bzw. Schweissraum anzuordnen. Die Sonotrode kann hierfür ein Befestigungsmittel aufweisen, mit welchem sie abnehmbar und in verschiedenen Positionen am Torsionsschwinger befestigbar ist. Es versteht sich, dass auch bei anderen Ausbildungen des Sonotrodenkopfs mehrere Schweissflächen vorgesehen sein können, welche durch Befestigung der Sonotrode in verschiedenen Drehpositionen am Torsionsschwinger zur Benutzung am Verdichtungs- bzw. Schweissraum angeordnet werden können. Bevorzugt umfasst der Sonotrodenkopf in einer weiteren bevorzugten Ausführungsform daher allgemein zwei oder mehrere umfangseitig ausgebildete Schweissflächen.

In Richtung der Torsionsachse ist der Verdichtungsraum vorzugsweise zu beiden Seiten der Schweissfläche von einem äusseren und einem inneren Seitenschieber begrenzt. Der äussere Seitenschieber ist dabei, in Richtung der Torsionsachse, dem Sonotrodenkopf vorgelagert und überdeckt vorzugsweise eine Stirnseite der Sonotrode vollständig. Die Seitenschieber definieren damit eine Länge des Verdichtungsraums in Längsrichtung, d.h. in Richtung der Torsionsachse. Indem der äussere Seitenschieber den Sonotrodenkopf vollständig überdeckt, ist dieser nach aussen vor mechanischen Einwirkungen geschützt. Der äussere Seitenschieber kann dabei vergleichsweise dünn ausgebildet sein, sodass der Verdichtungsraum in axialer Richtung nahe an das Schweissgut herangebracht werden kann.

Der Verdichtungsraum ist dabei in einer Richtung senkrecht zur Torsionsachse bevorzugt durchgehend und nach aussen offen ausgebildet. Damit kann das Schweissgut wie z.B. ein oder mehrere Kabel in einer Richtung quer zur Torsionsachse im Verdichtungsraum angeordnet werden.

Mit Vorteil ist der Sonotrodenkopf zumindest teilweise in einem Zwischenraum zwischen den Seitenschiebern angeordnet. Dabei entspricht bevorzugt ein Abstand der Seitenschieber in Richtung der Torsionsachse einer Dimension des Sonotrodenkopfs in dieser Richtung. Die genannte Dimensionsentsprechung versteht sich im Rahmen einer Toleranz, welche eine freie Torsionsschwingung des Sonotrodenkopfs sicherstellt.

Eine derartige Anordnung wird erst durch die erfindungsgemässe angeregte Torsionsschwingung mit vernachlässigbarem Längsschwingungsanteil des Sonotrodenkopfs ermöglicht. Anderenfalls wären die Seitenschieber aufgrund der Längsschwingungsamplitude vom Sonotrodenkopf zu beabstanden, womit sich unerwünschte Freiräume zwischen Sonotrodenkopf und Seitenschieber ergäben.

Der innere und der äussere Seitenschieber sind bevorzugt bezüglich der Sonotrode in einer Richtung senkrecht zur Torsionsachse gemeinsam verschiebbar angeordnet. Hierzu ist beispielsweise eine quer zur Torsionsachse ausgerichtete Längsführung ausgebildet, an welchen die Seitenschieber geführt verschiebbar sind. Der Sonotrodenkopf kann somit durch die Verschiebung der Seitenschieber weiter oder weniger weit in dem Zwischenraum zwischen den Seitenschiebern angeordnet sein.

Der innere und der äussere Seitenschieber sind in diesem Fall mit Vorteil gemeinsam an einem Wagen geführt, welcher in der Längsführung in senkrechter Richtung zur Torsionsachse verschiebbar geführt in der Vorrichtung angeordnet ist.

Mit Vorteil ist der Amboss derart am Wagen oder an einem der Seitenschieber gelagert, insbesondere am inneren Seitenschieber, dass der Amboss zusammen mit den Seitenschiebern quer zur Torsionsachse verschiebbar ist, wobei der Amboss derart angeordnet ist, dass er bei einer Verschiebung des Wagens oder des Seitenschiebers in einer Richtung zur Sonotrode hin verschoben wird. Bevorzugt ist der Amboss dabei zudem in Richtung parallel zur Torsionsachse verschiebbar angeordnet, sodass der Amboss in eine ausgefahrene Position bringbar ist, in welcher er über den Seitenschieber übersteht und die Gegen- bzw. Kompaktierfläche des Ambosses der Schweissfläche der Sonotrode gegenüberliegt. Der Amboss ist zudem mit Vorteil auch in eine eingefahrene Position verschiebbar, in welcher er in Längsrichtung mit dem Seitenschieber abschliesst, sodass der Verdichtungsraum zum einbringen von Schweissgut zugänglich ist.

Vorzugsweise schliesst der Amboss in der ausgefahrenen Position den Verdichtungsraum in einer Richtung senkrecht zur Torsionsachse nach aussen vollständig ab. Mit anderen Worten überbrückt der Amboss in der ausgefahrenen Position den Abstand zwischen den Seitenschiebern, d.h. eine Länge des Verdichtungsraums, vollständig.

Der Amboss bildet somit zusammen mit den Seitenschiebern bezüglich der Verschiebung quer zur Torsionsachse eine U-förmige, backenartige Einheit. Insbesondere kann somit bei ausgefahrenem Amboss durch das gemeinsame Absenken des innerer/äusseren Seitenschieber sowie des Ambosses das Volumen des Verdichtungsraums zum Verdichten des Schweissguts gleichmässig verringert werden.

Es versteht sich, dass auch andere Varianten denkbar sind, bei welchen der Amboss beispielsweise schwenkbar gelagert ist oder die Seitenschieber gegenüber der Sonotrode feststehen und der Amboss im Zwischenraum zwischen den Seitenschiebern zur Schweissfläche hin verschiebbar ist. Diese Varianten haben allerdings den Nachteil, dass sie konstruktiv vergleichsweise aufwändig und/oder in der Praxis umständlich in der Handhabung sind.

Die erfindungsgemässe Vorrichtung, insbesondere sämtliche oben beschriebenen Ausführungsformen, kommt aufgrund des Platz sparend zugänglichen Schweissraums mit Vorteil in mobilen Schweissgeräten zur Anwendung. Die Erfindung umfasst daher auch ein mobiles Schweissgerät, welches eine erfindungsgemässe Vorrichtung aufweist.

Derartige Geräte sind bevorzugt über eine Versorgungsleitung an eine separate Versorgungseinheit angeschlossen, welche vorzugsweise einen Generator zur Versorgung des Schweissgeräts mit elektrischem Strom oder einen Luftdruckgenerator zur Versorgung mit Pressluft umfasst. Die Versorgungseinheit umfasst mit Vorteil auch einen Steuerungscomputer, wobei z.B. ein Bedienungspanel, auch mit einem Bildschirm, am mobilen Schweissgerät ausgebildet ist. Der Benutzer kann in diesem Fall direkt am mobilen Schweissgerät die Versorgungseinheit bedienen. Die Versorgungsleitung fasst bevorzugt sämtliche erforderlichen Verbindungen zwischen der Versorgungseinheit und dem mobilen Schweissgerät in einer Leitung zusammen.

Derartige mobile Schweissgeräte sind besonders für den Einsatz bei Schweissgut geeignet, welches z.B. bereits verbaut bzw. auf andere Weise fixiert ist und nicht mehr einem stationären Schweissgerät zugeführt werden kann. Gerade in diesem Bereich erweist sich die erfindungsgemäss bereitgestellte Vorrichtung zum platzsparenden, effizienten und haltbaren Schweissen mit Ultraschall als besonders vorteilhaft.

In der Regel ist die Versorgungseinheit dabei stationär ausgebildet, während das mobile Schweissgerät weitgehend frei bewegt werden kann. Es ist allerdings auch denkbar die Versorgungseinheit auf einen fahrbaren Untersatz vorzusehen, sodass sie näher an den Arbeitsbereich herangebracht werden kann, in welchem dann mit dem mobilen Schweissgerät Schweissungen an verschiedenen Stellen vorgenommen werden können.

Als mobile Schweissgeräte werden z.B. Schweisszangen oder andere Ausführungen verstanden, welche von Benutzern getragen und an das Schweissgut herangeführt werden können. Denkbar sind auch Ausführungen, welche beispielsweise an einer gewichtskompensierenden Aufhängung gehalten sind und vom Benutzer nur geführt werden. Weiter können auch eine Befestigungsvorrichtung oder ein Stativ am mobilen Schweissgerät vorhanden sein, mit welcher es während des Schweissens in einem Arbeitsbereich temporär befestigt bzw. aufgestellt werden kann.

Typischerweise umfassen mobile Schweissgeräte zur Handhabung durch einen Benutzer aussenseitig am Gehäuse ausgebildete Handgriffe. Gemäss der Erfindung ist der Verdichtungs-/Schweissraum stirnseitig quer zur eine Längsrichtung der Vorrichtung bzw. der Sonotrode angeordnet. Bei einem erfindungsgemässen mobilen Schweissgerät ist daher bevorzugt in einem vorderen Bereich ein Handgriff quer zur Vorrichtungslängsachse an einer Oberseite des Gerät angeordnet. Dies ermöglicht eine sichere Handhabung, wenn das Gerät weitgehend in dessen Längsrichtung mit der vorderen Stirnseite an das Schweissgut heran bewegt wird. Es versteht sich, dass, je nach Lage des Schweissguts, das Gerät auch in anderen Richtungen an das Schweissgut heranbewegt werden kann.

Zusätzlich ist dabei mit Vorteil ein weiterer Handgriff in einem Bereich an einem hinteren Längsende des Geräts vorgesehen. Wird der senkrecht zur Torsions-/Längsachse angeordnete Konverter nach unten ausgerichtet, kann eine Gehäuseummantelung des Konverters mit Vorteil als pistolengriffartiger Haltegriff ausgebildet sein und so einen hinteren Haltegriff bilden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: eine erfindungsgemässe Vorrichtung in einer perspektivischen Schrägansicht;
- Fig. 2: eine Frontalansicht auf einen Arbeitsbereich der Vorrichtung längs einer Längsachse;
- Fig. 3a: eine Seitenansicht der Vorrichtung in einer Bereitschaftsstellung;
- Fig. 3b: eine Seitenansicht der Vorrichtung in einer Kompaktier/Schweissstellung;
- Fig. 4: Sonotrode und Konverter in einer Anordnung gemäss der erfindungsgemässen Vorrichtung.

Grundsätzlich sind in den Figuren gleiche Teile mit gleichen Bezugszeichen versehen.

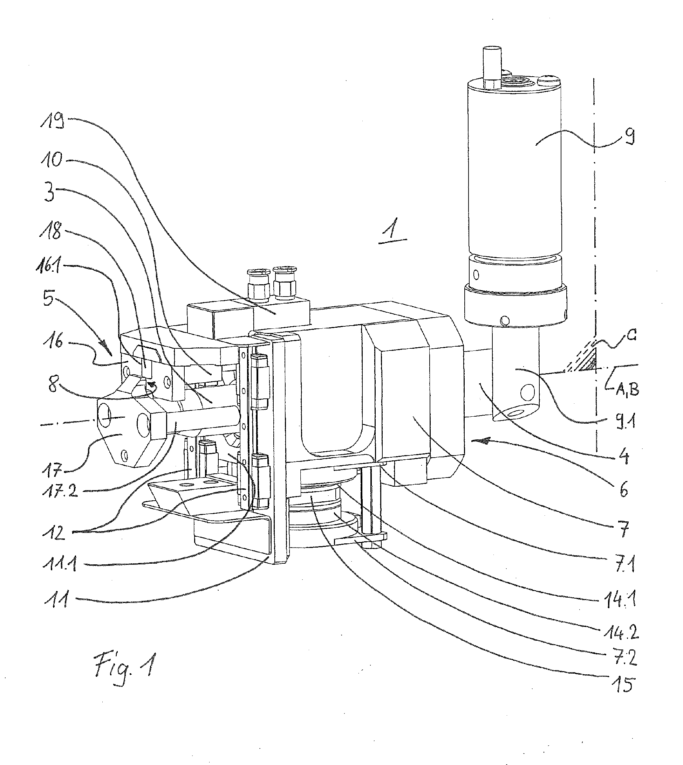

Figur 1 zeigt eine erfindungsgemässe Vorrichtung 1 in einer perspektivischen Schrägansicht.

Die Vorrichtung 1 weist an einem vorderen Längsende 5 einen Arbeitsbereich auf, an welchem ein Verdichtungs- bzw. Schweissraum 8 ausgebildet ist. In einem Endbereich an einem hinteren Längsende 6 der Vorrichtung 1 ist ein Schwingungserzeuger bzw. Konverter 9 angeordnet, dessen Aktor 9.1 mit einem Torsionsschwinger 4 der Vorrichtung 1 verbunden ist. Der Konverter 9 ist dabei senkrecht zur Torsionsachse B ausgerichtet.

Hier und im Folgenden wird eine Richtung, in welche sich der Konverter 9 erstreckt mit "oben" bezeichnet und entsprechend eine Gegenrichtung mit "unten". Es versteht sich, dass diese Zuordnung exemplarisch gemäss der hier beschriebenen Ausführungsform gewählt ist. Es sind selbstverständlich auch andere Ausführungsformen denkbar, bei welchen der Konverter 9 z.B. "nach unten" oder "zur Seite" ausgerichtet sein kann. Eine Ebene C bezeichnet somit im Folgenden eine Hochebene, welche die Längsachse A bzw. die Torsionsachse B umfasst und welche in Richtung oben-unten ausgerichtet ist. Bezüglich dieser Ebene C ist der Konverter 9 parallel und seitlich versetzt angeordnet.

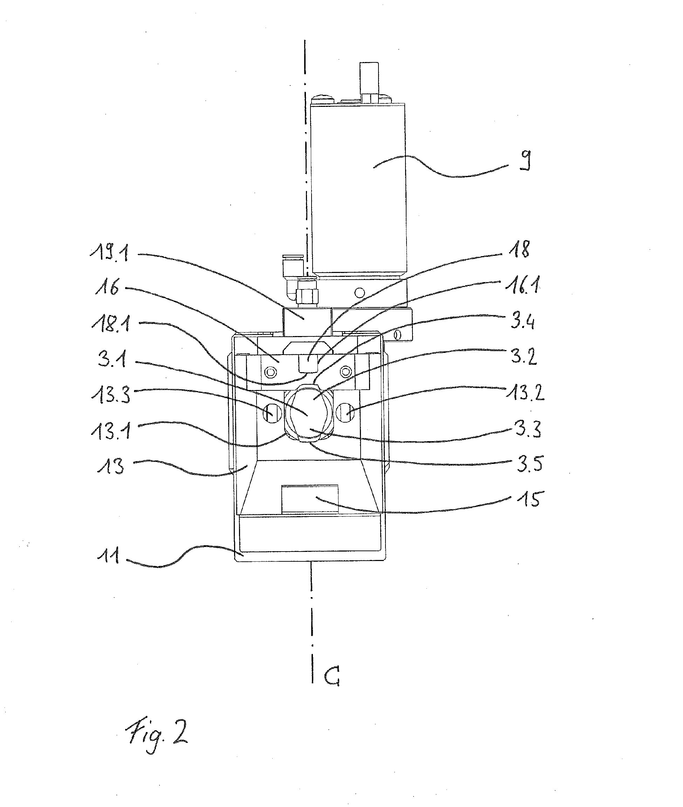

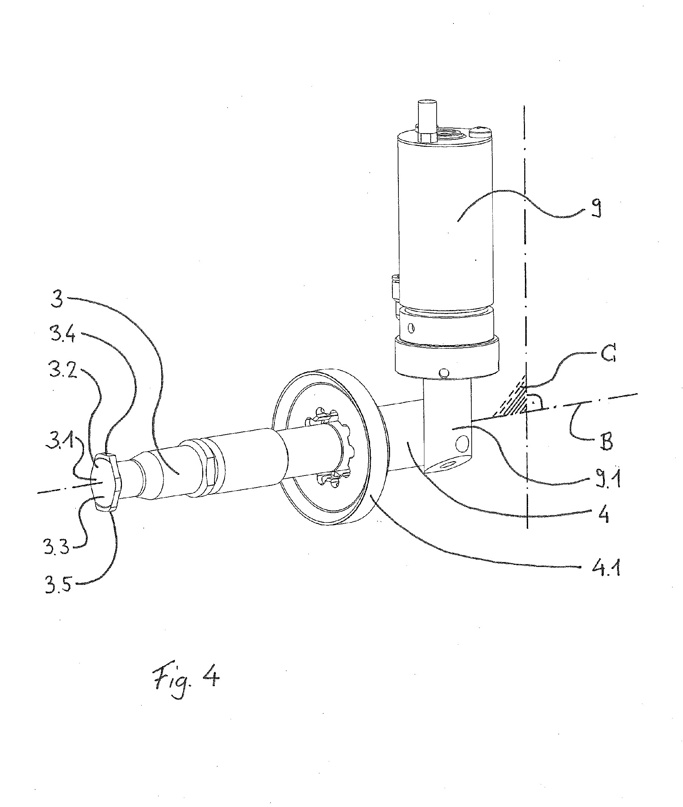

Der Torsionsschwinger 4 ist als länglicher Achskörper ausgebildet, dessen Längsachse mit einer Torsionsachse B zusammenfällt und der Längsachse A der Vorrichtung 1 entspricht (siehe auch Fig. 4). Der Torsionsschwinger 4 ist in einem Träger 7 der Vorrichtung 1 angeordnet und an diesem gelagert (siehe Fig. 2, Spannring 4.1). Ein hinteres, dem Arbeitsbereich abgewandtes, Längsende des Torsionsschwingers 4 ragt in Längsrichtung A über den Träger 7 hinaus. In einem Endbereich am hinteren Längsende des Torsionsschwingers greift der Aktor 9.1 des Konverters 9 tangential am Torsionsschwinger 4 an.

An einem vorderen, dem Arbeitsbereich zugewandten, Längsende des Trägers 7 ist eine senkrecht zur Längsachse A angeordnete Trägerplatte 11 vorgesehen, an deren Vorderseite eine senkrecht zur Längsachse A bzw. Torsionsachse B und in Richtung oben-unten angeordnete Längsführung 12 mit zwei bezüglich der Ebene C symmetrisch und parallelen Schienen angeordnet ist. Zwischen den Schienen ist eine Durchtritt 11.1 in der Trägerplatte 11 ausgebildet, durch welchen, stirnseitig am Torsionsschwinger 4 befestigt, eine Sonotrode 3 nach vorne in den Arbeitsbereich hindurchragt.

An den Schienen 12 ist eine Wagen 13 in Richtung senkrecht zur Torsionsachse B verschiebbar geführt gelagert (in Fig. 1 nicht dargestellt, siehe z.B. Fig. 2). An einer Unterseite des Trägers 7 sind zwei linear wirkende Aktoren 14.1 und 14.2 senkrecht zur Längsachse A angeordnet und über Trägerelemente 7.1 und 7.2 am Träger 7 abgestützt. Die Aktoren 14.1 und 14.2 können jeweils in ihrer Längsrichtung expandieren (z.B. durch Beaufschlagung mit Pressluft) und können somit jeweils eine Kraft in Richtung senkrecht zur Längsachse A ausüben. Zwischen den Aktoren 14.1 und 14.2 ist ein Mitnehmerelement 15 angeordnet, welches durch die Ausnehmung 11.1 in der Trägerplatte 11 nach vorne ragt und koppelnd in den Wagen 13 eingreift. Wird der obere, näher beim Träger 7 angeordnete Aktor 14.1 betätigt, ergibt sich somit eine Kraft auf das Mitnehmerelement 15 nach unten, womit auch der Wagen 13 nach unten verschoben wird. Umgekehrt ergibt sich über das Mitnehmerelement 15 eine Kraft auf den Wagen 13 nach oben, wenn der untere Aktor 14.2 betätigt wird.

Der Wagen 13 weist dabei eine Ausnehmung 13.1 auf, durch welche die Sonotrode 3 in jeder Verschiebestellung des Wagens 13 ungestört hindurch treten kann (siehe Fig. 2). In Längsrichtung vor dem Wagen 13 ist ein Kopf 3.1 der Sonotrode 3 angeordnet. Am Wagen 13 ist oberhalb der Sonotrode 3 ein innerer Seitenschieber 16 angeordnet, welcher direkt oberhalb des Sonotrodenkopfs 13.1 einen Durchtritt 16.1 in Längsrichtung A aufweist. Im Durchtritt 16.1 ist ein Amboss 18 angeordnet, welcher in einer Längsführung 10 geführt über einen in Längsrichtung A wirkenden Aktuator 19 durch den Durchtritt 16.1 ausfahrbar und einfahrbar ist. An einer dem Sonotrodenkopf 3.1 zugewandten Seite weist der Amboss 18 eine Gegenfläche bzw. Kompaktierfläche 18.1 auf. Sowohl Aktuator 19 als auch die Längsführung 10 sowie der Amboss 18 sind dabei am Wagen 13 gelagert und werden bei einer Verschiebung des Wagens 13 mit verschoben.

Ebenfalls am Wagen 13 gelagert ist ein äusserer Seitenschieber 17, welcher über zwei zum Träger 7 hin ragende Tragebolzen 17.1 und 17.2 am Wagen 13 befestigt ist. Der äussere Seitenschieber 17 ist dabei dem Sonotrodenkopf 3.1 in Längsrichtung A vorgelagert und ist vom inneren Seitenschieber 16 in Längsrichtung 1 beabstandet. Der äussere Seitenschieber 17 überdeckt den Sonotrodenkopf 3.1 stirnseitig vollständig.

Der Sonotrodenkopf 3.1 weist zwei flanschartig auskragende Flügel 3.2 und 3.3 auf, welche sich nach oben (3.2) und nach unten (3.3) erstrecken. Der nach oben ragende Flügel 3.2 ist dabei zwischen dem äusseren Seitenschieber 17 und dem inneren Seitenschieber 16 angeordnet, wobei umfangsseitig an einer Oberseite des Flügels 3.2 eine Schweissfläche 3.4 ausgebildet ist. Bei der Schweissfläche 3.4 angeordnete Bereiche der einander zugewandten Innenflächen der Seitenschieber 16 und 17 sowie die Schweissfläche 3.4 des Sonotrodenkopfs 3.1 begrenzen dabei drei Seiten des Verdichtungsraums 8. Der Amboss 18 ist derart am inneren Seitenschieber 16 verschiebbar angeordnet, dass er in ausgefahrenem Zustand an den äusseren Seitenschieber 17 angrenzt, wobei die Kompaktierfläche 18.1 der Schweissfläche 3.4 der Sonotrode 3 gegenüberliegt. Bei ausgefahrenem Amboss 18 ist somit der Verdichtungsraum 8 in der Ebene C ringförmig umschlossen. In Richtung senkrecht zur Ebene C ist der Verdichtungsraum 8 zu beiden Seiten offen, sodass Schweissgut in Querrichtung durch den Verdichtungsraum 8 hindurch treten kann.

Figur 2 zeigt eine Frontalansicht auf den Arbeitsbereich 5 der Vorrichtung 1 längs der Längsachse A. Zur besseren Übersicht wurde auf die Darstellung des äusseren Seitenschiebers 17 verzichtet, um den Blick auf den Sonotrodenkopf 13.1 freizugeben.

Der Sonotrodenkopf 13.1 ist in der Draufsicht weitgehend rautenförmig ausgebildet, wodurch sich der nach oben und der nach unten ragende Flügel 3.2 bzw. 3.3 ergeben. Der Sonotrodenkopf 3.1 ist bezüglich der Torsionsachse B symmetrisch ausgebildet, sodass allfällige Unwuchten bezüglich einer Torsionsschwingung vermieden werden.

Ein oberes Ende des Sonotrodenkopfs 3.1, d.h. der nach oben ragende Flügel 3.2, ist abgeflacht (gekappte Rautenform) und zur, bezüglich der Torsionsachse B umfangsseitig angeordneten, Schweissfläche 3.4 ausgebildet. Der nach unten ragende Flügel 3.3 ist entsprechend abgeflacht, wobei je nach Ausführungsform der Vorrichtung 1 eine zweite, (Ersatz-) Schweissfläche 3.5 ausgebildet sein kann. Diese ist in der dargestellten Anordnung nicht in einer funktionellen Stellung, kann aber beispielsweise bei drehbar am Torsionsschwinger 4 angebrachter Sonotrode 3 in die Position der Schweissfläche 3.4 gedreht werden. Dies kann insbesondere dann sinnvoll sein, wenn sich die Schweissflächen rasch abnützten und ausgewechselt werden müssen.

Oberhalb der Schweissfläche 3.4 ist der innere Seitenschieber 16 als querbalkenförmiges Element ausgebildet, welches in weitgehend senkrechter Richtung zur Ebene C angeordnet ist. Der Seitenschieber 16 ist dabei in einer entsprechend am Wagen 13 ausgebildeten Nut befestigt. Durch den Durchtritt 16.1 am Seitenschieber 16 ist der in der Längsführung 10 angeordnete Amboss 18 erkennbar. An einer der Schweissfläche 3.4 zugewandten Unterseite des Ambosses 18 ist die Gegen- bzw. Kompaktierfläche 18.1 ausgebildet.

Auf der Höhe der Torsionsachse B bzw. der Längsachse A der Vorrichtung 1 sind zwei weitere Ausnehmungen 13.2 und 13.3 am Wagen 13 ausgebildet, welche zur Aufnahme und Halterung der Tragbolzen 17.1 und 17.2 des äusseren Seitenschiebers 17 vorgesehen sind.

Aus Fig. 2 ist weiter die seitliche bezüglich der Ebene C versetzte Anordnung des Konverters 9 ersichtlich, welche den tangentialen Angriff des Aktors 9.1 am Torsionsschwinger 4 zur Anregung der Torsionsschwingung ermöglicht.

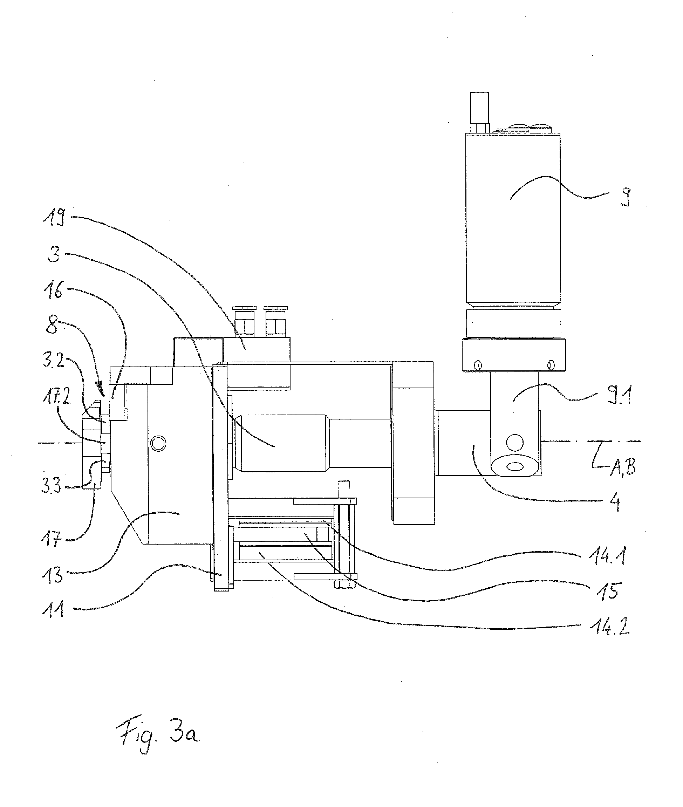

Figur 3a zeigt eine Seitenansicht der Vorrichtung 1, wobei zur besseren Übersichtlichkeit auf eine Darstellung des Trägers 7 verzichtet wurde.

Die Darstellung der Fig. 3a zeigt die Vorrichtung 1 in einem Bereitschaftszustand. Der untere Akutuator 14.2 ist expandiert und der obere Aktuator 14.1 ist kollabiert, sodass das dazwischen angeordnete Mitnehmerelement 15 nach oben verschoben ist. Durch die Kopplung an den Wagen 13 ist dieser vom Mitnehmerelement 15 mitgenommen und ebenfalls nach oben verschoben.

Der Amboss 18 ist vollständig in den Durchtritt 16.1 eingefahren, sodass eine Stirnfläche des Ambosses 18 mit der dem äusseren Seitenschieber 17 zugewandten Innenfläche des inneren Seitenschiebers 16 abschliesst. Der Verdichtungsraum 8 ist somit nach oben offen, womit Schweissgut wie beispielsweise Litzen oder andere Kabel in den Verdichtungsraum 8 eingebracht und auf der Schweissfläche 3.4 der Sonotrode 3 angeordnet werden können.

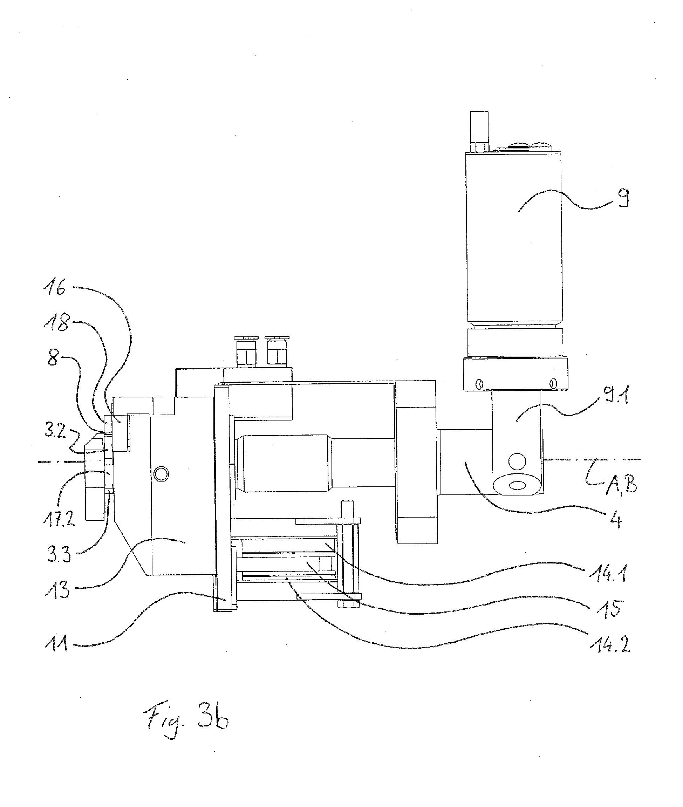

Figur 3b entspricht der Darstellung der Fig. 3a, wobei die Vorrichtung 1 in einer Kompaktier-/Schweissstellung ist.

Der Amboss 18 ist in Längsrichtung A nach vorne aus dem Durchtritt ausgefahren, sodass seine Stirnseite an eine dem inneren Seitenschieber 16 zugewandten Innenfläche des äusseren Seitenschiebers 17 stösst. Die Kompaktierfläche 18.1 des Ambosses 18 ist der Schweissfläche des Sonotrodenkopfs 3.4 gegenüberliegend angeordnet. Der Verdichtungsraum 8 ist damit nach oben durch den Amboss 18 vollständig abgeschlossen.

In der Schweissstellung ist zudem der Wagen 13 nach unten verfahren. Dies wird erreicht indem der obere Aktuator 14.1 expandiert und der untere Aktuator 14.2 kollabiert ist. Das Mitnehmerelement 15 wird damit nach unten, vom Träger 7 weg, bewegt und nimmt den Wagen 13 mit, welcher in der Längsführung 12 nach unten verschoben wird.

Zusammen mit dem Wagen 13 sind auch die daran angebrachten Seitenschieber 16 und 17 sowie der Amboss 18 (sowie Aktuator 19 und Längsführung 10) bezüglich des Trägers 7 nach unten abgesenkt. Die am Träger 7 gelagerte Sonotrode 3 sowie der Torsionsschwinger 4 bleiben dabei bezüglich des Trägers 7 ortsfest. Somit ergibt sich eine relativ Verschiebung des Wagens 13 mit daran angebrachten Komponenten gegenüber der Sonotrode 3.

Seitenschieber 16 und 17 sowie Amboss 18 bilden dabei einen U-förmigen Kompaktierungs-Backen, welcher den Sonotrodenkopf 3.1 zumindest teilweise umfasst und beim Übergang in die Schweissstellung gegen diesen verschoben wird. Der Sonotrodenkopf 3.1 bzw. der Flügel 3.2 des Sonotrodenkopfs 3.1 tritt dabei in den von der U-Form umschlossenen Innenraum ein. Der Innenraum der U-Form sowie der Flügel 3.2 des Sonotrodenkopfs 3.1 sind dabei derart bemessen, dass der Flügel 3.2. den Innenraum in Längsrichtung A praktisch vollständig ausfüllt. Es versteht sich, dass dabei eine Toleranz vorgesehen ist, welche eine freie Torsionsschwingung des Sonotrodenkopfs 3.1 erlaubt.

Beim Übergang in die Schweissstellung wird insbesondere auch die Kompaktierfläche 18.1 des Ambosses 18 zur Schweissfläche 3.4 hin verschoben. Das im Verdichtungsraum 8 vorhandene Schweissgut (nicht dargestellt) wird zwischen Kompaktierfläche 18.1 und Schweissfläche 3.4 verdichtet und dabei je nach der vom Aktuator 14.2 ausgeübten Kraft gegen die Schweissfläche 3.4 gepresst. Die Torsionsschwingung der Sonotrode 3 kann in der Folge über die Schweissfläche 3.4 des Sonotrodenkopfs 3.1 in das Schweissgut eingebracht werden. Das Schweissgut wird bevorzugt bereits vor der Anregung der Torsionsschwingung in der Sonotrode 3 mit einer ersten Kraft kompaktiert. Bei Auslösen des Schweissvorgangs, d.h. bei angeregter Torsionsschwingung der Sonotrode, kann das Schweissgut in der Folge weiter mit der ersten Kraft beaufschlagt bleiben oder mit einer zweiten z.B. grösseren Kraft beaufschlagt werden.

Zur Entnahme des Schweissguts wird die Vorrichtung 1 wieder in den Bereitschaftszustand gebracht, d.h. der Wagen 13 wird wieder nach oben verfahren und der Amboss 18 eingefahren, womit der Verdichtungsraum nach oben wieder offen.

Figur 4 zeigt eine Anordnung der Sonotrode 3, des Torsionsschwingers 4 sowie des Konverters 9 in der Anordnung gemäss der erfindungsgemässen Vorrichtung.

Eine vordere Stirnseite der Sonotrode 3 wird vom Sonotrodenkopf 3.1 abgeschlossen. Längs der Torsionsachse B bzw. Längsachse der Sonotrode 3 erstreckt sich die Sonotrode nach hinten zu einem Bereich 3.6, in welchem sie mit dem Torsionsschwinger 4 verbunden ist. Der Torsionsschwinger 4 ist dabei als länglicher Achskörper ausgebildet, dessen Längsachse mit der Längsachse der Sonotrode 3 sowie der Torsionsachse B zusammenfällt.

Der Torsionsschwinger 4 ist an einer Längsposition hinter der Sonotrode 3 von dem Spannring 4.1 umgeben, welcher ein Lager für den Torsionsschwinger bildet, an welchem der Torsionsschwinger am Träger 7 abgestützt ist. Typischerweise ist der Spannring 4.1 dabei in einem Schwingungsknoten des angeregten Torsionsschwingungsmodes angeordnet, um eine Schwingungsübertragung auf den Träger 7 und damit auch auf andere Komponenten der Vorrichtung 1 zu vermeiden.

Hinter dem Spannring 4.1, d.h. auf einer bezüglich dem Spannring 4.1 der Sonotrode 3 gegenüberliegenden Längsposition des Torsionsschwingers 4, greift der Aktuator 9.1 des seitlich versetzt angeordneten Konverters 9 tangential zu einem Umfang des Torsionsschwingers 4 und senkrecht zur Längsachse bzw. zur Torsionsachse B am Torsionsschwinger 4 an.

## Patentansprüche

1. Vorrichtung (1) zum Verschweissen von Metallteilen mittels Ultraschall, insbesondere zum Verschweissen von Litzen,
a.) umfassend eine Sonotrode (3) mit einem Sonotrodenkopf (3.1), welcher von einem Schwingungserzeuger (9) in Torsionsschwingungen bezüglich einer Torsionsachse (B) anregbar ist, wobei
b.) am Sonotrodenkopf (3.1) bezüglich der Torsionsachse (B) umfangsseitig wenigstens eine Schweissfläche (3.4) angeordnet ist, und
c.) ein Amboss (18) mit einer Kompaktierfläche (18.1) vorhanden ist, welche gegenüber der Schweissfläche der Sonotrode (3) bezüglich dieser feststehend anordenbar ist, wobei
d.) bei gegenüberliegender Anordnung die Schweissfläche (3.4) und die Kompaktierfläche (18.1) einen für die Aufnahme von zu verschweissende Teilen vorgesehen Verdichtungsraum (8) in einer Richtung senkrecht zur Torsionsachse (B) begrenzen,
**dadurch gekennzeichnet, dass**
e.) die Sonotrode (3) derart ausgebildet und mit dem Schwingungserzeuger (9) gekoppelt ist, dass die gesamte Sonotrode (3) zu einer Torsionsschwingung mit vernachlässigbar kleinem Längsschwingungsanteil anregbar ist.

2. Vorrichtung nach Anspruch 1, **dadurch gekennzeichnet, dass** der Schwingungserzeuger (9) zur Erzeugung von Längsschwingungen ausgebildet ist und senkrecht zur Torsionsachse (B) der Sonotrode (3) angeordnet ist.

3. Vorrichtung nach Anspruch 1 oder 2, **dadurch gekennzeichnet, dass** der Schwingungserzeuger (9) zur Anregung der Torsionsschwingungen über einen bezüglich der Torsionsschwingung mit der Sonotrode (3) gekoppelten Torsionsschwinger (4) mit der Sonotrode (3) zusammenwirkt.

4. Vorrichtung nach Anspruch 3, **dadurch gekennzeichnet, dass** der Schwingungserzeuger (9) mit einem Aktor (9.1) in einem radialen Abstand von der Torsionsachse (B) am Torsionsschwinger (4) angreift.

5. Vorrichtung nach einem der Ansprüche 1 bis 4, **dadurch gekennzeichnet, dass** die Torsionsachse (B) mit einer Längsachse der Sonotrode (3) zusammenfällt, insbesondere auch mit einer Längsachse des Torsionsschwingers (4).

6. Vorrichtung nach einem der Ansprüche 1 bis 5, **dadurch gekennzeichnet, dass** der Sonotrodenkopf (3.1) flanschartig an einem freien Ende der Sonotrode (3) quer zur Torsionsachse (B) auskragt und sich insbesondere die Schweissfläche (3.4) über die gesamte Längsdimension des Sonotrodenkopfs (3.1) in Richtung der Torsionsachse (B) erstreckt.

7. Vorrichtung nach einem der Ansprüche 1 bis 6, **dadurch gekennzeichnet, dass** der Verdichtungsraum (8) in Richtung der Torsionsachse (8) zu beiden Seiten der Schweissfläche der Sonotrode (3) von einem äusseren (17) und einem inneren Seitenschieber (16) begrenzt ist, wobei der äussere Seitenschieber (17) der Sonotrode (3) in Richtung der Torsionsachse (B) dem Sonotrodenkopf (3.1) vorgelagert ist und vorzugsweise eine Stirnseite der Sonotrode (3) vollständig überdeckt.

8. Vorrichtung nach Anspruch 7, **dadurch gekennzeichnet, dass** der Sonotrodenkopf (3.1) zumindest teilweise in einem Zwischenraum zwischen den Seitenschiebern (16, 17) angeordnet ist, wobei insbesondere ein Abstand der Seitenschieber (16, 17) in Richtung der Torsionsachse (B) einer Dimension des Sonotrodenkopfs (3.1) in dieser Richtung entspricht.

9. Vorrichtung nach Anspruch 7 oder 8, **dadurch gekennzeichnet, dass** der innere (16) und der äussere Seitenschieber (17) bezüglich der Sonotrode (3) in einer Richtung senkrecht zur Torsionsachse (B) gemeinsam verschiebbar angeordnet sind.

10. Vorrichtung nach Anspruch 9, **dadurch gekennzeichnet, dass** der innere (16) und der äussere (17) Seitenschieber gemeinsam an einem in senkrechter Richtung zur Torsionsachse (B) gegenüber der Sonotrode (3) verschiebbar geführten Wagen (13) gelagert sind, sodass bei einer Verschiebung des Wagens (13) der Sonotrodenkopf (3.1) in den Zwischenraum zwischen den Seitenschiebern (16, 17) ein- oder ausbringbar ist.

11. Vorrichtung nach einem der Ansprüche 1 bis 10, **dadurch gekennzeichnet, dass** der Verdichtungsraum (8) in einer Richtung senkrecht zur Torsionsachse (B) durchgehend und nach aussen offen ausgebildet ist.

12. Vorrichtung nach einem der Ansprüche 9 bis 11, **dadurch gekennzeichnet, dass** der Amboss (18) am Wagen (13) oder an einem der Seitenschieber (16, 17), insbesondere am inneren Seitenschieber (16), gelagert ist, sodass der Amboss (18) zusammen mit dem Seitenschieber (16, 17) quer zur Torsionsachse (B) verschiebbar ist, wobei der Amboss (18) derart angeordnet ist, dass er bei einer Verschiebung des Wagens (13) oder des Seitenschiebers (16, 17) in einer Richtung zur Sonotrode (3) hin verschoben wird.

13. Vorrichtung nach Anspruch 12, **dadurch gekennzeichnet, dass** der Amboss (18) in Richtung parallel zur Torsionsachse (B) verschiebbar gelagert ist, sodass der Amboss (18) in eine ausgefahrene Position bringbar ist, in welcher er in Längsrichtung (A) über den Seitenschieber (16, 17) übersteht und die Kompaktierfläche (18.1) der Schweissfläche (3.4) gegenüberliegt.

14. Mobiles Schweissgerät mit einer Vorrichtung (1) zum Ultraschallschweissen gemäss einem der vorigen Ansprüche.

15. Mobiles Schweissgerät nach Anspruch 14, **dadurch gekennzeichnet, dass** es über eine Versorgungsleitung an eine, insbesondere stationäre, Versorgungseinheit angeschlossen ist.
